# EUROPEAN PATENT APPLICATION

(11) **EP 4 667 757 A1**
(43) Date of publication of application: **24.12.2025**
(21) Application number: 24183815.0
(22) Date of filing: 21.06.2024
(51) Int. Cl.: F16B 12/16, F16B 12/24

(54) **ADJUSTABLE CONNECTING SCREW FOR MODULAR FURNITURE AND FURNISHING ACCESSORIES**

(71) Applicant: Damiano Latini S.r.l., 62010 Montecosaro (IT)
(72) Inventor: Latini, Pierdamiano, Porto Sant'Elpidio (FM) (IT)
(74) Representative: Tartuferi, Renzo

(57) **Abstract**

The adjustable connecting screw is an innovative device that allows you to connect the adjacent sides of modular furniture and furnishing accessories, and adjust their distance precisely. It solves the problem of production tolerances, guaranteeing a precise final size of the composition. The adjustable connecting screw is made up of a dowel, an abutment, and a grub screw, which can be operated with an Allen key. The main advantages include the possibility of adjusting the bases even after assembly, the compensation of spaces with precision to the tenth of a millimeter and the correction of any out-of-squareness or misalignments. The invention applies to the industry of kit, modular furniture and furnishing accessories, improving the efficiency and quality of assembly.

## Description

The present invention concerns a joint which, in addition to connecting two adjacent sides, allows the space between them to be adjusted via a grub screw.

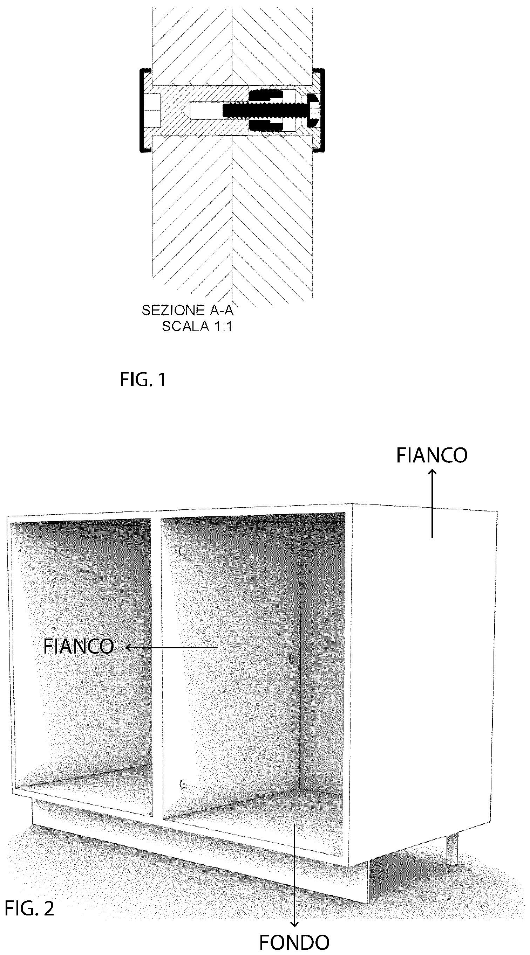

More specifically, in the sector of kit furniture and modular furniture, elements called bases, units or shells of different widths are combined. The construction of these elements is made up of several components such as the "bottom" (horizontal element) and the sides (vertical elements), the latter usually connected by a detail called "stretcher" which can be made of wood or aluminum (Fig. 2).

However normally once these bases have been assembled, the desired size is never equal to the sum of the nominal lengths. By combining multiple bases there is a sum of tolerances which, once the composition is completed, can generate differences of even a few millimetres. The adjustable connecting screw allows you to adjust the bases distance by acting as a connection between the sides. Once adjusted, it maintains its primary function of mechanical junction between the two sides (Fig. 1).

It is well known that currently the kit and modular furniture industry, for the connection of furniture bases, uses a joint consisting of a metric screw and a connecting screw with cap and pin which have the mere function of connection.

A solution commonly adopted by modular furniture industry is to create bases with shorter lengths, for example a 600 mm nominal length base is produced 599 mm long, but in any case, it is not a solution that allows the problem to be managed precisely. The juxtaposition of multiple bases generates uncertainty about the real size of the final composition which will only be possible to verify during the assembly and installation phase of the furniture.

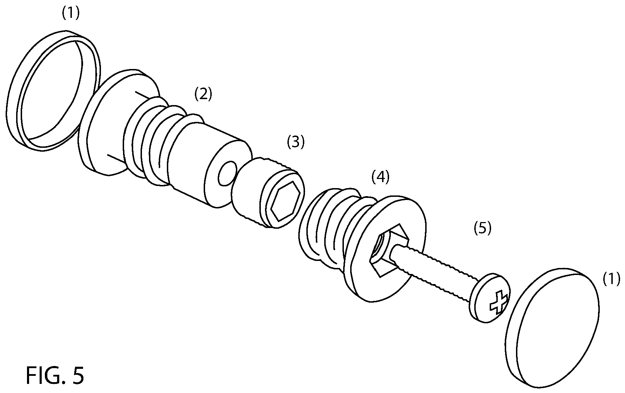

The invention of the adjustable connecting screw grants the union between the sides and allows the adjustment of the space between them. The detail in Fig. 5 named (2) acts as a dowel and is screwed onto the panel on which a 12 mm hole is previously made, while the detail (4) is its abutment and is installed contiguously on the adjacent panel.

The adjustable connecting screw allows adjustment via the detail (3) which is operated with an Allen key inserted inside the detail (4) and pushes on the detail (2). Once the adjustment is complete, insert the M4 screw (5) inside the detail (4) to mechanically tighten the panels. To complete the joint, a customizable plastic cover cap is provided (1). As can be seen from the foregoing, the advantages that the adjustable connecting screw device achieves are evident.

A further advantage is that the adjustment of the bases is possible even after having assembled the entire composition, this facilitates the professional who assembles the furniture as he can calibrate it with a precision to the tenth of a millimeter even after having installed the composition.

An additional advantage is given by the possibility of regulating the adjustable connecting screw on a single point, to calibrate not only the distance between the panels but also any out-of-squareness of the panels or any alignment with the upper top or closing sides.

Although the invention has been described with reference specifically to one of its embodiments, provided for illustrative and non-limiting purposes, given the above description, multiple modifications and variations will appear evident to an industry expert. The present invention, therefore, intends to enclose all the modifications and variations that fall within the scope of the following claims.

### Brief description of the drawings

Fig. 1 shows the section of the adjustable connecting screw
Fig. 2 shows a typical base for kitchen furniture with an example of positioning of the adjustable connecting screw

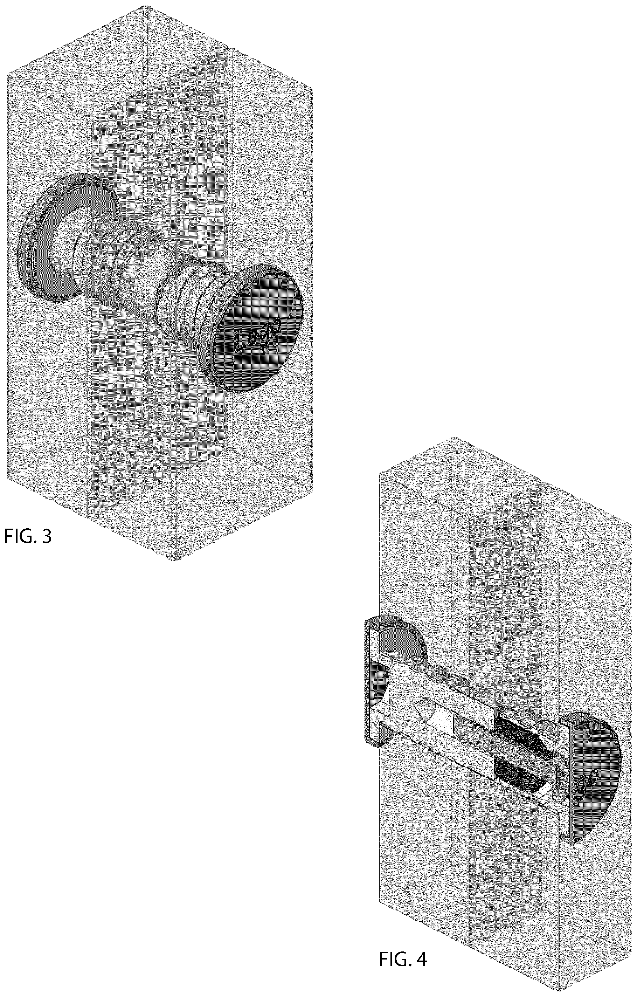

Fig. 3 and Fig. 4 represent the assembly and axonometry of the adjustable connecting screw between the two units
Fig. 5 shows the exploded view of the adjustable connecting screw

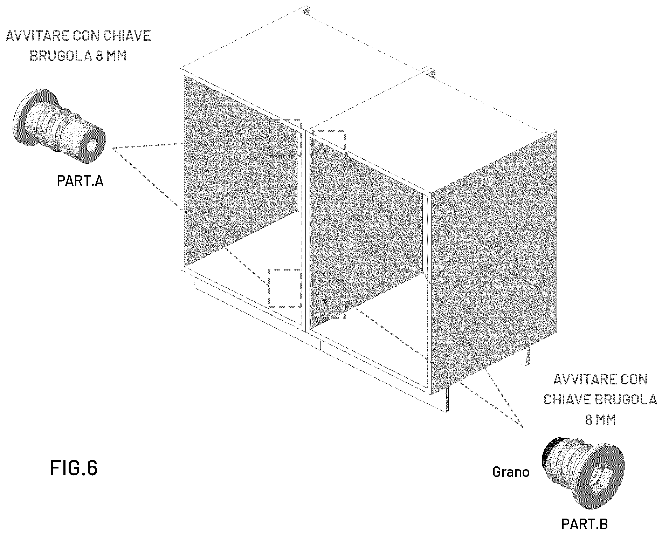

Fig. 6 shows the positioning of the elements

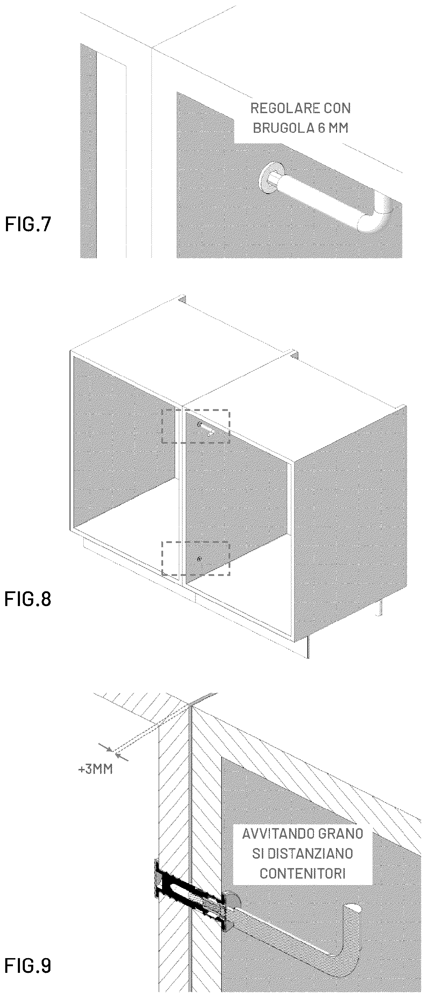

Fig.7 shows the adjustment of the grub screw (3) using an Allen key.
Fig. 8 shows the assembly and section of the adjustable connecting screw components
Fig. 9 shows the technical drawing of the detail (2)

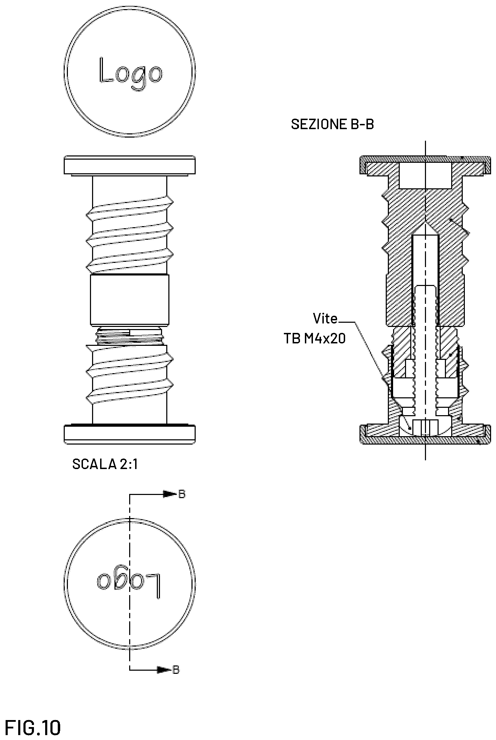

Fig. 10 shows the technical drawing of the detail (4)

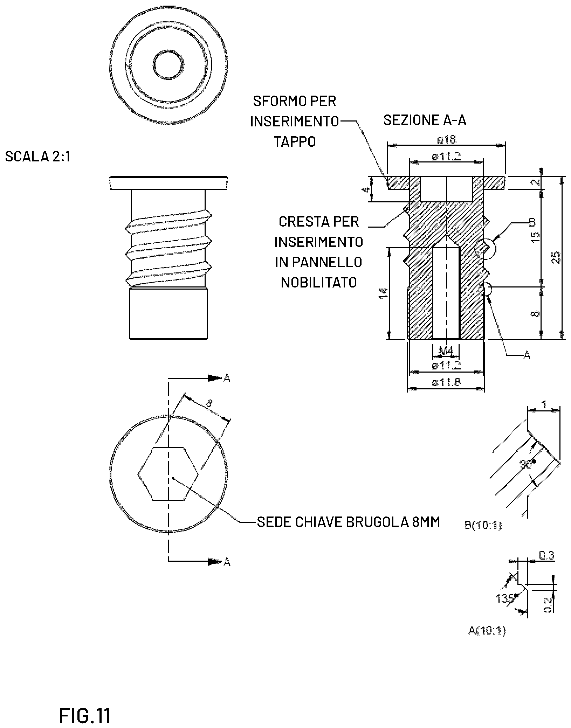

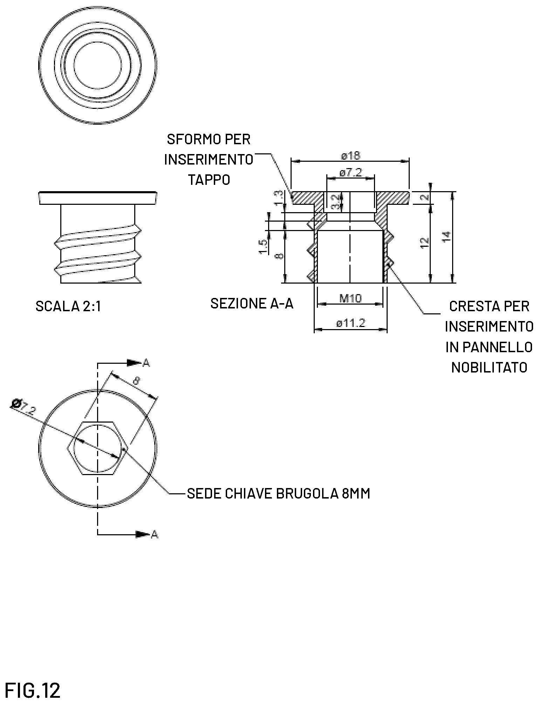

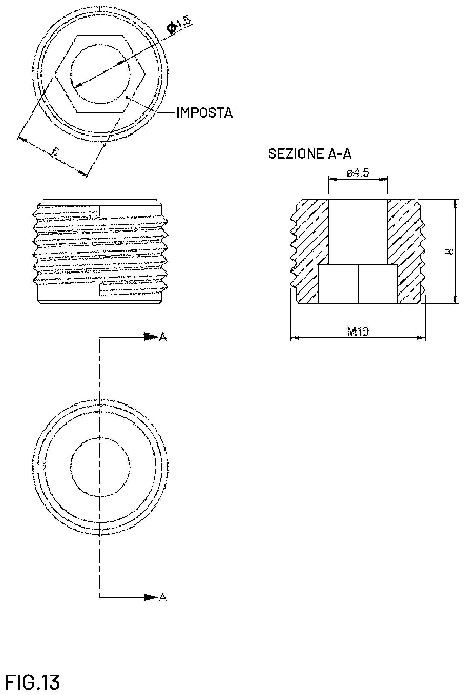

Fig. 11 shows the technical drawing of the detail (3)

## Claims

1. Joint for parts of modular furniture and furnishing accessories such as shelving, bookcases, wardrobes suitable for insertion into a seat or hole made of two components to be joined, that includes 3 elements, DOWEL (2) threaded to accommodate the metric screw which keeps the two sides blocked, the GRUB SCREW (3) which allows the adjustment of the space between the two sides and the ABUTMENT (4) drilled and threaded which allows the passage of the Allen key for adjusting the GRUB SCREW (3) and the passage of the metric screw for the tightening with the DOWEL (5) with the possibility of using a customized cover cap (1)

## Amended claims

### Amended claims in accordance with Rule 137(2) EPC.

1. Joint for component of modular furniture and furnishing accessories such as shelving, bookcases, wardrobes suitable for insertion into a seat or hole made in said two components to be joined, that includes 4 elements, ,
- A metric screw(5) which keeps the two components blocked;
- A DOWEL (2) with an outer thread and an inner thread to accommodate the metric screw (5)
- A GRUB SCREW (3) which allows the adjustment of the space between the two components;
- An ABUTMENT (4) drilled with an outer thread and an inner thread, in which the grub screw(3) is screwed,which allows the passage of an Allen key for adjusting the GRUB SCREW (3) and the passage of the metric screw for the tightening with the DOWEL (5) with the possibility of using a customized cover cap (1)
